# EUROPÄISCHE PATENTSCHRIFT

(11) **EP 2 430 345 B1**
(45) Veröffentlichungstag und Bekanntmachung des Hinweises auf die Patenterteilung: **21.08.2013**
(21) Anmeldenummer: 10713949.5
(22) Anmeldetag: 15.04.2010
(51) Int. Cl.: F16K 31/04, F16K 31/53, H02K 7/08

(54) **STEUERVENTIL**
CONTROL VALVE
SOUPAPE DE COMMANDE

(30) Priorität: 15.05.2009 DE 102009003133
(43) Veröffentlichungstag der Anmeldung: 21.03.2012
(73) Patentinhaber: Robert Bosch GmbH, 70442 Stuttgart (DE)
(72) Erfinder: MOENCH, Jochen, 76547 Sinzheim (DE); HILS, Alois, 77880 Sasbach (DE); REEB, Georg, 77815 Buehl Eisental (DE); MUSCHELKNAUTZ, Claudius, 77815 Buehl (DE)
(86) Internationale Anmeldenummer: PCT/EP2010/054927
(87) Internationale Veröffentlichungsnummer: WO 2010/130521

(56) Entgegenhaltungen:
- DE-A1- 2 750 477
- DE-A1- 2 809 390
- DE-A1- 19 513 970
- DE-A1-102006 053 311
- US-A- 5 398 564

## Beschreibung

Die Erfindung betrifft ein Steuerventil für einen Kühlkreislauf einer Brennkraftmaschine, aufweisend ein zweiteiliges Ventilgehäuse mit zumindest einem Flanschbereich, wobei ein zweites Ventilgehäuseteil einstückig ausgeführt ist und das zweite Ventilgehäuseteil einen Rotor aufweist, wobei der Rotor einen ersten Bereich mit einer Schneckenverzahnung und einen zweiten Bereich mit einem Blechpaket auf einer Rotorwelle aufweist, wobei am Rotor zwei radiale Lagerelemente und an den beiden Enden der Rotorwelle zwei axiale Lagerelemente angeordnet sind.

### Stand der Technik

Um Brennkraftmaschinen in Kraftfahrzeugen vor dem Überhitzen zu schützen und um andererseits die Abwärme der Brennkraftmaschine zu nutzen, beispielsweise zur Heizung des Fahrgastraums, wird in Brennkraftmaschinen ein Kühlmittel umgepumpt, das die überschüssige Wärmeenergie der Brennkraftmaschine aufnimmt und im gewünschten Maße abführen kann. Der Heiz- bzw. Kühlkreislauf einer Brennkraftmaschine umfasst in der Regel verschiedene Teilkreisläufe, wie beispielsweise einem Kühlerzweig, einen Bypasszweig und/oder einen Heizungswärmetauscherzweig. Über einen im Kühlerzweig angeordneten Kühler oder Radiator kann die überschüssige Wärmemenge des Kühlmittels an die Umgebungsluft abgegeben werden. Ein Heizungswärmetauscher macht andererseits die zur Verfügung stehende Wärmemenge des Kühlmittels zur Beheizung des Fahrgastraums nutzbar. Die Verteilung des Kühlmittelstroms auf die verschiedenen Zweige eines Kühl- bzw. Heizungskreislaufes wird dabei zumindest durch ein Steuerventil gesteuert. Die gewünschte Kühlmitteltemperatur wird durch Mischen eines gekühlten und eines ungekühlten Kühlmittelstroms eingestellt. So erfolgt die Regelung des Mischverhältnisses zwischen dem Kühler- und dem Bypass-Zweig üblicherweise mithilfe von Steuerventilen, die über einen motorbetriebenen Antrieb verfügen oder über Wachsthermostate.

Das Steuerventil, wie z. B. in der DE 10 2006 053 331 A1 offenbart, weist ein Ventilgehäuse auf, von den mindestens ein Einlass-Kanal und mindestens ein Auslass-Kanal abzweigen. Darüber hinaus weist das Steuerventil zumindest eine, in dem Ventilgehäuse angeordneten, um die Achse einer Antriebswelle drehbaren, Steuerscheibe zur Volumenstromregelung auf. Die Volumenstromregelung wird mittels in der Steuerscheibe angeordneten Durchgangsöffnungen bzw. Durchtrittsflächen realisiert, die je nach Position der Steuerscheibe einen unterschiedlich großen Öffnungsquerschhitt freigeben. Die Steuerscheibe ist mit einem Stirnrad verbunden, welches von einer Schneckenverzahnung angetrieben wird. Die Schneckenverzahnung ist dabei auf einen Rotor zusammen mit einem Blechpaket, in welchem Magnete integriert sind, angebracht. Des Weiteren ist im Ventilgehäuse ein Stator mit Spulen eingebracht, wobei der Rotor durch ein an den Spulen angelegtes Wechselfeld in Rotation versetzt wird. Der Rotor wird üblicherweise beidseitig radial sowohl am schneckenseitigen Ende der Rotorwelle als auch am paketseitigen Ende der Rotorwelle gelagert. Dabei ist die erste Lagerung am paketseitigen Ende in einem ersten Ventilgehäuseteil sowie die zweite radiale Lagerung am schneckenseitigen Ende der Rotorwelle in einem zweiten Ventilgehäuseteil untergebracht.

Um den Rotor bei dem Zusammenbau nicht zu verspannen, sind das erste Ventilgehäuseteil und das zweite Ventilgehäuseteil exakt gegenübereinander auszurichten- Aufgrund des Abstands der beiden radialen Lagerelemente zueinander sind die beiden Lagerelemente in den jeweiligen Ventilgehäuseteilen präzise mit ihren Längsachsen auf der Rotorwellenachse auszurichten, da andernfalls eine Gleitfläche der Lagerelemente bei unpräziser Ausrichtung einen erhöhten Verschleiß aufweist. Zusätzlich muss hierzu ein zweites Ventilgehäuseteil präzise auf das erste Ventilgehäuseteil ausgerichtet sein. Durch die Lagerung des Rotors an den jeweiligen Enden weist die Rotorwelle durch die über die Schneckenverzahung eingebrachten Kräfte eine Durchbiegung auf, die zu einem erhöhten Verschleiß der Schenkenverzahnung führt.

In der DE 28 09 390 sind Antriebsaggregate für Wischermotor offenbart, die einen Elektromotor und ein Getriebe umfassen, wobei das Getriebe als Schneckengetriebe ausgebildet ist, und wobei jeweils zwei radiale Lagerelemente zur Abstützung der Kräfte aus dem Elektromotor bzw. der Schneckenverzahnung vorgesehen sind.

### Offenbarung der Erfindung

Es ist Aufgabe der Erfindung, den Aufbau des Steuerventils zu vereinfachen und die Langzeitbetriebssicherheit des Steuerventils durch eine Reduktion des Verschleißes zu erhöhen.

Diese Aufgabe wird durch ein Steuerventil gemäß Anspruch 1 gelöst. Bevorzugte Ausführungsformen sind in den abhängigen Ansprüchen angegeben.

Erfindungsgemäß wurde erkannt, dass eine unpräzise Ausrichtung der radialen Lagerelemente zumindest dadurch vermieden werden kann, indem ein erstes axiales Lagerelement in einem ersten Ventilgehäuseteil und zumindest ein zweites axiales Lagerelement und zwei radiale Lagerelemente in einem zweiten Ventilgehäuseteil angeordnet sind.

Die Anordnung von zwei radialen Lagerelementen in einem Ventilgehäuseteil hat den Vorteil, dass die Ausrichtung der Längsachsen der radialen Lagerelemente zur Rotorwellenachse des Rotors verbessert ist.

Gemäß einer Ausführungsform der Erfindung ist zwischen dem ersten Bereich der Schneckenverzahnung und dem zweiten Bereich des Blechpakets auf der Rotorwelle eines der beiden radialen Lagerelemente etwa mittig auf der Rotorwelle angeordnet. Dies hat den Vorteil, dass radiale Kräfte aus der Schneckenverzahnung nicht einseitig auf das zweite am unteren Ende der Rotorwelle angeordnete Lagerelement übertragen werden, sondern gleichmäßig auf die beiden Lagerelemente. Durch die gleichmäßigere Kraftverteilung zwischen den beiden Lagerelementen wird die Betriebssicherheit durch einen gleichmäßigeren Verschleiß der beiden Lagerelemente erhöht. Des Weiteren wird die Durchbiegung der Rotorwelle reduziert.

Gemäß der Ausführungsform der Erfindung weist die Rotorwelle an zumindest einem axialen Ende einen Anlaufpilz auf. Durch die pilzförmige Ausgestaltung werden Reibungsverluste am axialen Ende durch die rotorachsennahe Ausgestaltung des Pilzes reduziert. Des Weiteren erlaubt die pilzförmige Ausgestaltung der Anlauffläche eine elastische Verformung des Anlaufpilzes.

Nachfolgend wird die Erfindung anhand einer Figur erläutert. Dabei zeigt:

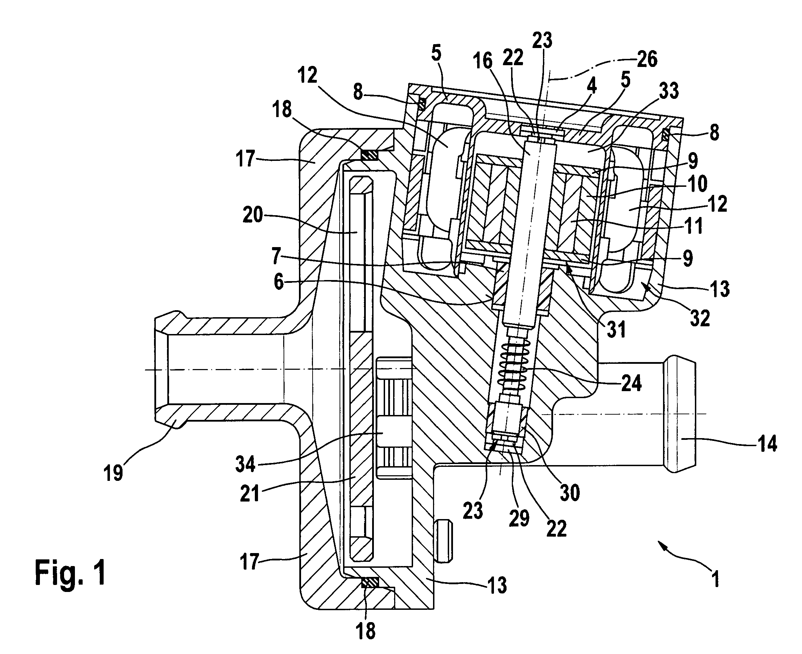

Fig. 1 eine schematische Schnittansicht eines Steuerventils.

Fig. 1 zeigt eine schematische Schnittansicht eines Steuerventils 1. Das Steuerventil 1 weist einen ersten rechtseitigen Flanschbereich 14 und einen zweiten linksseitigen Flanschbereich 19 auf. Die Flanschbereiche 14, 19 dienen zum Anschluss des Steuerventils 1 an Kühlmittelleitungen einer Brennkraftmaschine am Steuerventil 1. Die Längsachsen der beiden Flanschbereiche 14, 19 sind versetzt zueinander angeordnet. Der zweite Flanschbereich 19 ist dabei einstückig mit einem dritten Ventilgehäuseteil 17 verbunden. Der erste Flanschbereich 14 ist mit einem zweiten Ventilgehäuseteil 13 verbunden. In dem zweiten Ventilgehäuseteil 13 ist ein Rotor 31 und ein Stator 32 eines Elektromotors angeordnet. Der Rotor 31 weist eine Rotorwelle 16 auf, auf der in einem ersten Bereich eine Schneckenverzahnung 24 und in einem zweiten Bereich ein Blechpaket 10 angeordnet sind. Die paketierten Bleche des Blechpakets 10 umfassen dabei radial die Rotorwelle 16 und werden axial durch zwei Blechhülsen 9 begrenzt. In dem Blechpaket 10 ist zumindest ein Magnet 11 angeordnet. Das Blechpaket 10 ist in seiner räumlichen Anordnung in einer Rotorwellenachse 26 von dem Bereich der Schneckenverzahnung 24 durch eine radiale Lageraufnahme 6 und dem darin angeordneten ersten radialen Lagerelement 7 abgetrennt. Die Flächen der Rotorwelle 16, die an den Lagerelementen 4, 7, 29, 15 anliegen, weisen dabei einen höheren Härtegrad als die übrigen Flächen der Rotorwelle 16 auf.

Der Rotor 31 sitzt dabei in einem zweiten Ventilgehäuseteil 13 in einem Ventilgehäuseinnenraum 33, welcher überwiegend mit Kühlmittel, welches zur Kühlung einer Brennkraftmaschine dient, gefüllt ist. Radial wird der Rotor 31 durch den Stator 32, der ebenso im zweiten Ventilgehäuseteil 13 angeordnet ist, umschlossen. Der Stator 32 weist dabei zumindest eine Spule 12 mit einer Mehrzahl von Wicklungen sowie nicht dargestellte Blechpakete auf. Die Spulen 12 erzeugen bei angelegter Spannung ein Magnetfeld, welches den Rotor 31 in Rotation um die Rotorwellenachse 26 versetzt. Die Spulen können hierbei mit Wechselspannung betrieben werden oder elektronisch kommutiert werden.

Der Rotor 31 ist in dem zweiten Ventilgehäuseteil 13 über zwei axiale Lagerelemente 4, 29 sowie über zwei radiale Lagerelemente 7, 30 gelagert. Das erste axiale Lagerelement 4 ist dabei in einem ersten Ventilgehäuseteil 5 angeordnet. Die beiden radialen Lagerelemente 7, 30 befinden sich in radialen Lageraufnahmen 6, 36 in dem zweiten Ventilgehäuseteil 13. Des Weiteren befindet sich das zweite axiale Lagerelement 29 im zweiten Ventilgehäuse 13, wobei es an einem Ende einer Rotorwelle 16 nahe dem Bereich der Schneckenverzahnung 24 angeordnet ist. Ebenso ist in diesem Bereich das zweite radiale Lagerelement 30 angeordnet. Durch die Anordnung der beiden radialen Lagerelemente 7, 30 nahe zu dem Bereich der Schneckenverzahnung 24 können die Kräfte aus der Schneckenverzahnung 24 gleichmäßig und verschleißgünstig abgestützt werden. Das erste radiale Lagerelement 7 weist einen vergrößerten Aussendurchmesser auf um die Montage des zweiten Lagerelements 30 zu erleichtern. Des Weiteren ist das erste radiale Lagerelement 7 gegenüber dem zweiten radialen Lagerelement 30 verstärkt ausgelegt, um die durch den Elektromotor und das wechselnde Magnetfeld induzierten Kräfte aufzunehmen. Das erste radiale Lagerelement 7 ist dabei etwa in mittiger Lage zur Länge der Rotorwelle 16 angeordnet. Durch die Anordnung der beiden radialen Lagerelemente 7, 30 zusammen im zweiten Ventilgehäuseteil 13 können die Lagerflächen einfach und zuverlässig mit ihren Längsachsen auf der Rotorwellenachse 26 angeordnet werden. Dies hat außerdem den Vorteil, dass der einseitige Verschleiß von Lagerflächen der radialen Lagerelemente 7, 30 durch eine Fehlausrichtung der Längsachsen der Lagerelemente 7, 30 vermieden wird. Die radialen Lagerflächen 7, 30 sind als Gleitbuchsen ausgeführt, die in der Ausführungsform einen Kunststoff aufweisen, insbesondere einen PTFE-Kunststoff, der eine reibungsarme Lagerung ermöglicht, alternativ sind anstelle von Gleitbuchsen auch Wälzlager denkbar.

Die axialen Lagerelemente 4, 29 sind plattenförmig ausgeprägt, wobei das erste axiale Lagerelement 4 in dem ersten Ventilgehäuseteil 5 und das zweite axiale Lagerelement 29 in den zweiten Ventilgehäuseteil 13 angeordnet sind. Der Rotor 13 weist an den Enden der Rotorwelle 16 jeweils einen Anlaufpilz 22 auf, der zur Abstützung der Lagerkräfte auf die axialen Lagerelemente 4, 29 dient. Der Anlaufpilz 22 weist in der Ausführungsform einen hochfesten Kunststoff, insbesondere einen Polyetheretherketon- (PEEK) Kunststoff oder einen Polyamid- (PA) Kunststoff auf. Diese Kunststoffe eignen sich insbesondere für den Anlaufpilz 22, da sie verschleißarm die Reibung im Anlaufpilz 22 aufnehmen können und einfach durch Eindrücken in eine Befestigungsöffnung 23, die auch zur Herstellung der Rotorwelle 16 dient, befestigbar sind. Denkbar sind jedoch auch andere Kunststoffe. Die pilzförmige Ausgestaltung des Anlaufpilzes 22 reduziert die rotatorische Reibung an Oberfläche, indem die Anlagefläche nahe der Rotorwellenachse 26 angeordnet sind. Durch die Verwendung der oben genannten Kunststoffe können Schwingungen der Brennkraftmaschine auf den Rotor 31 durch elastische Verformung des Anlaufpilzes 22 abgefedert werden.

Durch die Anordnung der beiden radialen Lagerelemente 7, 30 in dem zweiten Ventilgehäuseteil 13 wird der Achsversatz und der Winkelfehler der Lagerelemente 7, 30 gering gehalten. Ebenso ist die Durchbiegung der Rotorwelle 16 im Bereich der Schneckenverzahnung 24 reduziert, sodass sich ein höherer Verzahnungswirkungsgrad und reduzierte Durchbiegung der Rotorwelle 16 einstellt. Die beiden axialen Lagerelemente 4, 29 sind hinsichtlich Achsversatz oder Winkelfehler unempfindlicher als die beiden radialen Lagerelemente 7, 30, sodass die Anordnung der beiden axialen Lagerelemente 4, 29 in zwei separaten Ventilgehäuseteilen 5, 13 die Zuverlässigkeit der Lagerung des Rotors 31 nicht vermindert. Die Lagerung des Rotors 31 erleichtert zudem die Montage des Rotors 31 in dem Steuerventil 1.

Durch die Rotation des Rotors 31 wird über die Schneckenverzahnung 24 ein nicht dargestelltes Stirnrad angetrieben, welches mit einer Steuerscheibe 21 verbunden ist. Die Steuerscheibe 21 weist zumindest eine Öffnung 20 auf, wobei durch ein Verdrehen der Steuerscheibe 21 die Öffnung 20 vor einen Einlasskanal 34 gedreht wird. Je nach Stellung der Öffnung 20 vor dem Einlasskanal 34 wird die Durchflussfläche der Steuerscheibe 21 reguliert. Die Öffnung 20 ist mit ihrer Längsachse zur Rotationsachse der Steuerscheibe 21 versetzt angeordnet.

Der Ventilgehäuseinnenraum 33 wird durch ein drittes Ventilgehäuseteil 17 und einem Dichtelement 18 seitlich gegenüber der Umgebung abgeschlossen, sodass das durch das Steuerventil 1 fließende Kühlmittel nur über die beiden Flanschbereiche 14, 19 ein- bzw. austreten kann. Der Rotor 31 sowie der Stator 32, die im zweiten Ventilgehäuseteil 13 angeordnet sind, werden durch das erste Ventilgehäuseteil 5 und ein zweites Dichtelement 8 gegenüber der Umgebung abgeschlossen.

Dem Fachmann ist selbstverständlich geläufig, dass die Anordnung der Lagerelemente des Rotors 31 beispielhaft ist. Wesentlich dabei ist jedoch, dass zwei radiale Lagerelemente in einem Ventilgehäuseteil die Rotorwelle stützen, wobei die axiale Bewegung der Rotorwelle durch zwei separate axiale Lagerelemente verhindert wird. Dabei eignen sich insbesondere Anlaufpilze an der Rotorwelle zur Abstützung der axialen Kräfte an den axialen Lagerelementen. Durch diese Anordnung ist der Rotor eines Steuerventils verschleissarm und zuverlässig in dem Steuerventil gelagert.

## Patentansprüche

1. Steuerventil (1) für einen Kühlkreislauf einer Brennkraftmaschine, aufweisend ein zweiteiliges Ventilgehäuse mit zumindest einem Flanschbereich zum Anschluss des Steuerventils (1) an einer Kühlmittelleitung, wobei das Ventilgehäuse ein erstes Ventilgehäuseteil (5) und ein zweites Ventilgehäuseteil (13) umfasst, wobei das zweite Ventilgehäuseteil (13) einen Rotor (31) aufweist, wobei der Rotor (31) einen ersten Bereich mit einer Schneckenverzahnung (24) und einen zweiten Bereich mit einem Blechpaket (10) auf einer Rotorwelle (16) aufweist, wobei am Rotor (31) genau zwei radiale Lagerelemente (7, 30) und an den beiden Enden der Rotorwelle (16) zwei axiale Lagerelemente (4, 29) angeordnet sind, **dadurch gekennzeichnet, dass** das zweite Ventilgehäuseteil (13) einstückig ausgeführt ist, wobei das erste axiale Lagerelement (4) in dem ersten Ventilgehäuseteil (5) und wobei das zweite axiale Lagerelement (29) und die zwei radialn Lagerelemente (7, 30) in dem zweiten Ventilgehäuseteil (13) angeordnet sind.

2. Steuerventil (1) nach Anspruch 1, **dadurch gekennzeichnet, dass** zwischen dem ersten Bereich der Schneckenverzahnung (24) und dem zweiten Bereich des Blechpakets (10) eines der beiden radialen Lagerelemente (7, 30) angeordnet ist.

3. Steuerventil (1) nach Anspruch 1 oder 2, **dadurch gekennzeichnet, dass** das eines der beiden radialen Lagerelemente (7, 30) etwa mittig auf der Rotorwelle (16) angeordnet ist.

4. Steuerventil (1) nach einem der Anspüche 1 bis 3, **dadurch gekennzeichnet, dass** an einem Ende der Rotorwelle (16) am ersten Bereich der Schneckenverzahnung (24) das zweites radiales Lagerelement (30) angeordnet ist

5. Steuerventil (1) nach einem der Ansprüche 1 bis 4, **dadurch gekennzeichnet, dass** zumindes eines der beiden radialen Lagerelemente (7, 30) der Rotorwelle (16) als Gleitbuchse ausgebildet ist

6. Steuerventil (1) nach einem der Ansprüche 1 bis 5, **dadurch gekennzeichnet**, die Rotorwelle (16) an zumindest einem axialen Ende einen Anlaufpilz (22) aufweist.

7. Steuerventil (1) nach ein Anspruch 6, **dadurch gekennzeichnet, dass** der Anlaufpilz (22) überwiegend einen hochfesten Kunststoff, insbesondere einen Polyetheretherketon- (PEEK) oder einen hochfesten Kunststoff aufweist.

8. Steuerventil (1) nach einem der Anspüche 6 und 7, **dadurch gekennzeichnet, dass** der Anlaufpilz (22) mittels einer Pressverbindung in der Rotorwelle (16) befestigt ist.

## Claims

1. Control valve (1) for a cooling circuit of an internal combustion engine, having a two-part valve housing with at least one flange region for the connection of the control valve (1) to a coolant line, wherein the valve housing comprises a first valve housing part (5) and a second valve housing part (13), wherein the second valve housing part (13) has a rotor (31), wherein the rotor (31) has a first region with a worm toothing (24) and has a second region with a laminated core (10) on a rotor shaft (16), wherein precisely two radial bearing elements (7, 30) are arranged on the rotor (31) and two axial bearing elements (4, 29) are arranged on the two ends of the rotor shaft (16), **characterized in that** the second valve housing (13) is formed in one piece, wherein the first axial bearing element (4) is arranged in the first valve housing part (5), and wherein the second axial bearing element (29) and the second radial bearing elements (7, 30) are arranged in the second valve housing part (13).

2. Control valve (1) according to Claim 1, **characterized in that** one of the two radial bearding elements (7, 30) is arranged between the first region of the worm toothing (24) and the second region of the laminated core (10).

3. Control valve (1) according to Claim 1 or 2, **characterized in that** one of the two radial bearing elements (7, 30) is arranged approximately centrally on the rotor shaft (16).

4. Control valve (1) according to one of Claims 1 to 3, **characterized in that** the second radial bearing element (30) is arranged on one end of the rotor shaft (16) at the first region of the worm toothing (24).

5. Control valve (1) according to one of Claims 1 to 4, **characterized in that** at least one of the two radial bearing elements (7, 30) of the rotor shaft (16) is in the form of a slide bushing.

6. Control valve (1) according to one of Claims 1 to 5, **characterized in that** the rotor shaft (16) has a mushroom-shaped thrust portion (22) on at least one axial end.

7. Control valve (1) according to Claim 6, **characterized in that** the mushroom-shaped thrust portion (22) has predominantly a high-strength plastic, in particular polyetheretherketone (PEEK) or a highstrength plastic.

8. Control valve (1) according to either of Claims 6 and 7, **characterized in that** the mushroom-shaped thrust portion (22) is fastened in the rotor shaft (16) by means of a press-fit connection.

## Revendications

1. Soupape de commande (1) pour un circuit de refroidissement d'un moteur à combustion interne, comprenant un boîtier de soupape en deux parties pourvu d'au moins une région de bride pour le raccordement de la soupape de commande (1) à une conduite de réfrigérant, le boîtier de soupape comportant une première partie de boîtier de soupape (5) et une deuxième partie de boîtier de soupape (13), la deuxième partie de boîtier de soupape (13) comprenant un rotor (31), le rotor (31) comprenant une première région pourvue d'une denture hélicoïdale (24) et une deuxième région pourvue d'un noyau feuilleté (10) sur un arbre de rotor (16), exactement deux éléments de palier radiaux (7, 30) étant disposés sur le rotor (31) et deux éléments de palier axiaux (4, 29) étant disposés aux deux extrémités de l'arbre de rotor (16), **caractérisée en ce que** la deuxième partie de boîtier de soupape (13) est réalisée d'un seul tenant, le premier élément de palier axial (4) étant disposé dans la première partie de boîtier de soupape (5), et le deuxième élément de palier axial (29) ainsi que les deux éléments dé palier radiaux (7, 30) étant disposés dans la deuxième partie de boîtier de soupape (13).

2. Soupape de commande (1) selon la revendication 1, **caractérisée en ce que** l'un des deux éléments de palier radiaux (7, 30) est disposé entre la première région de la denture hélicoïdale (24) et la deuxième région du noyau feuilleté (10).

3. Soupape de commande (1) selon la revendication 1 ou 2, **caractérisée en ce que** l'un des deux éléments de palier radiaux (7, 30) est disposé approximativement de manière centrale sur l'arbre de rotor (16).

4. Soupape de commande (1) selon l'une quelconque des revendications 1 à 3, **caractérisée en ce que** le deuxième élément de palier radial (30) est disposé à une extrémité de l'arbre de rotor (16) au niveau de la première région de la denture hélicoïdale (24).

5. Soupape de commande (1) selon l'une quelconque des revendications 1 à 4, **caractérisée en ce qu'**au moins l'un des deux éléments de palier radiaux (7, 30) de l'arbre de rotor (16) est réalisé sous forme de douille de glissement.

6. Soupape de commande (1) selon l'une quelconque des revendications 1 à 5, **caractérisée en ce que** l'arbre de rotor (16) comprend un élément de butée en forme de champignon (22) à au moins une extrémité axiale.

7. Soupape de commande (1) selon la revendication 6, **caractérisée en ce que** l'élément de butée en forme de champignon (22) comprend principalement un plastique à résistance élevée, en particulierstun plastique à base de polyétheréthercétone (PEEK) d'ou un plastique à résistance élevées.

8. Soupape de commande (1) selon l'une quelconque des revendications 6 et 7, **caractérisée en ce que** l'élément de butée en forme de champignon (22) est fixé dans l'arbre de rotor (16) au moyen d'une liaison à ajustement serré.
